# FASCICULE DE BREVET EUROPEEN

(11) **EP 2 849 992 B1**
(45) Date de publication et mention de la délivrance du brevet: **25.12.2019**
(21) Numéro de dépôt: 13729791.7
(22) Date de dépôt: 03.05.2013
(51) Int. Cl.: B62K 21/16

(54) **POTENCE DE CYCLE À INCLINAISON RÉGLABLE**
LENKSTANGENSCHAFT FÜR EIN FAHRRAD MIT EINSTELLBARER NEIGUNG
BICYCLE HANDLEBAR STEM WITH ADJUSTABLE INCLINATION

(30) Priorité: 14.05.2012 FR 1254385
(43) Date de publication de la demande: 25.03.2015
(73) Titulaire: Look Cycle International, 58000 Nevers (FR)
(72) Inventeur: LANZ, Matthieu, F-58000 Nevers (FR)
(74) Mandataire: Petit, Maxime
(86) Numéro de dépôt international: PCT/FR2013/051002
(87) Numéro de publication internationale: WO 2013/171406

(56) Documents cités:
- WO-A1-03/033335
- CN-Y- 201 350 949
- US-B1- 6 244 131

## Description

La présente invention concerne une potence de cycle à inclinaison réglable. La potence porte à l'une des ses extrémités le guidon du cycle et est à son extrémité opposée fixée à la partie supérieure du tube pivot monté rotatif dans la douille de direction du cadre de cycle.

L'avantage de l'inclinaison réglable de la potence réside dans le fait qu'elle peut être adaptée pour être commode à des personnes prenant une position différente sur le cycle.

Afin de pouvoir régler l'inclinaison de la potence, les moyens de fixation de la potence au tube pivot comportent une articulation associée à des moyens de serrage comme cela est connu par exemples des publications US5515744, ou bien des publications EP2248716 ou EP0662419 de la demanderesse. Selon ces documents, la potence peut être bloquée dans une inclinaison choisie grâce aux moyens de serrage.

Cependant, dans ce genre de dispositifs, un des inconvénients est que le serrage a une tendance à glisser et d'entraîner une modification non souhaitée de l'angle d'inclinaison.

C'est la raison pour laquelle dans les dispositifs selon le US5515744 et le EP2248716, la potence est bloquée en position angulaire à l'aide de crans disposés sur les surfaces cylindriques de serrage en contact. Cela entraîne un autre inconvénient, à savoir qu'il est impossible d'obtenir un réglage continu car le réglage se fera avec un pas de par exemple 3 degrés, ce qui donne une différence en hauteur de 3 à 5 mm par cran en bout de potence. Exactement les mêmes inconvénients se retrouvent également dans le document US6244131 qui utilise des surfaces de serrage coniques pourvues de crans.

Dans le dispositif selon le EP0662419, il a dans la pratique été nécessaire d'ajouter des rondelles anti-glissement de part et d'autre de l'articulation et d'utiliser une vis formant axe de l'articulation de taille relativement importante pour supporter un fort couple de serrage.

Le document WO03/033335 décrit une potence à inclinaison réglable selon le préambule des revendications 1 et 5 dans laquelle le dispositif de réglage de l'inclinaison comporte des surfaces de serrage coniques lisses sur des saillies opposées entrant dans des évidements correspondants de manière à former un pivot. Les saillies tronconiques sont sollicitées l'une en direction de l'autre dans les évidements par une grosse vis centrale qui traverse un trou central d'une des saillies pour être vissée dans un trou central taraudé prévu dans la saillie opposée. La capacité de fixation est basée sur la friction. Cependant, pour éviter le coincement des saillies tronconiques, il est déconseillé de prévoir un angle de conicité inférieur à 15°.Pour être sûr d'éviter ce coincement non souhaité des formes coniques l'une dans l'autre, ce document propose en outre l'utilisation d'un élément fendu constitué par une douille conique intermédiaire placée entre chaque saillie et son évidement de réception

La plupart des potences connues de ce genre sont en outre relativement compliquées par leur construction et comportent un grand nombre de pièces à assembler, ce qui entraîne un poids et un coût élevés et souvent aussi une perte de rigidité de l'ensemble.

Le but de l'invention est de proposer une potence de cycle à réglage de l'inclinaison de la potence en continu sans aucun risque de glissement et ne nécessitant pas un grand couple de serrage. Contrairement au document WO03/033335, l'invention tire profit du coincement de formes coniques pour bloquer de manière solide le pivot.

En outre, la potence selon l'invention comporte très peu de pièces, ce qui apporte une rigidité améliorée à l'ensemble.

Un objet de l'invention est une potence de cycle à inclinaison réglable selon la revendication 1.

Selon d'autres caractéristiques de l'invention :
- ledit angle de conicité est d'environ 10° ;
- lesdits moyens de liaison comportent une pluralité de vis s'étendant par un premier alésage respectif prévu alternativement dans l'un et l'autre desdits bras du corps de potence, ce premier alésage pouvant être aligné sur un deuxième alésage prévu dans l'un des corps tronconiques afin de permettre auxdites vis d'être vissées dans un trou taraudé respectif prévu sur la face intérieur de l'autre corps tronconique ;
- lesdits corps tronconiques sont des pièces rapportées ;

L'invention a également pour objet une potence de cycle à inclinaison réglable selon l'une quelconque des revendications 5 à 7.

L'invention concerne également un cycle pourvu d'une potence présentant les caractéristiques de l'invention.

D'autres caractéristiques et avantages de l'invention ressortiront de la description qui va suivre de deux modes de réalisation non limitatifs de l'invention, en référence aux figures annexées dans lesquelles :
- la figure 1 est une vue latérale partielle d'un cycle pourvu d'une potence selon l'invention;
- la figure 2 est une vue en perspective de l'extrémité haute d'un tube pivot pourvu d'une articulation pour la liaison avec la potence ;
- les figures 3 et 4 sont des vues en perspectives de deux corps tronconiques utilisés dans l'articulation ;
- la figure 5 montre le corps tronconique de la figure 4 disposé dans un logement de forme complémentaire d'un côté de l'articulation ;
- la figure 6 est une vue schématique illustrant les moyens de liaison entre les deux corps tronconiques, ainsi qu'une vis expulsion des corps tronconiques ;
- la figure 7 est une vue schématique de dessus d'une coupe illustrant l'emplacement des corps tronconiques dans l'articulation ;
- la figure 8 est une vue d'ensemble en perspective d'un deuxième mode de réalisation d'une potence selon l'invention comportant un corps de potence composé de deux bras parallèles ;
- la figure 9 est une vue en perspective d'une pièce de liaison devant être fixée sur le tube de pivot et portant l'articulation de la potence ;
- la figure 10 est une vue éclatée en perspective de la potence de la figure 8 ;
- la figure 11 est une vue schématique partielle en coupe de l'articulation de la potence ; et
- la figure 12 est une vue en coupe longitudinale de l'ensemble de la potence de la figure 8.

Dans les figures, les éléments identiques ou équivalents porteront les mêmes signes de référence.

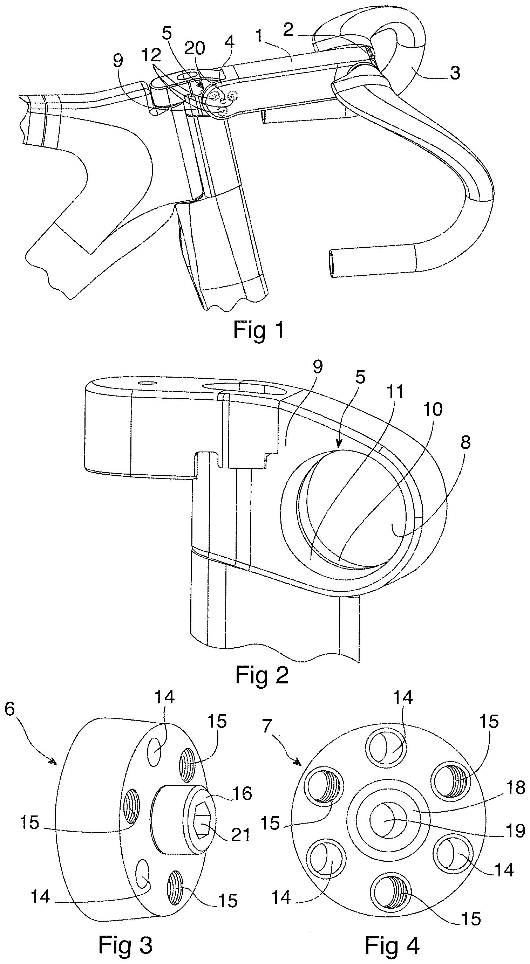

La figure 1 montre une potence comportant un corps de potence 1 dont l'une des extrémités, l'extrémité avant, comporte des moyens de fixation 2 d'un guidon 3, alors que l'extrémité opposée, l'extrémité arrière, comporte deux bras parallèles 4 reliés à un tube pivot de fourche par une articulation 5.

L'articulation 5 est associée à des moyens de serrage aptes à bloquer la potence 1 dans une position correspondant à un angle d'inclinaison choisi.

Selon une caractéristique essentielle de l'invention, ces moyens de serrage comportent une paire de corps tronconiques 6, 7 reliés aux faces intérieures des extrémités des bras parallèles 4 du corps de potence 1 et font partie de l'articulation 5. Ces corps tronconiques 6, 7 sont dans un premier mode de réalisation des pièces rapportées disposées aux extrémités des bras 4.

Ce premier mode de réalisation de l'invention sera maintenant décrit en référence aux figures 1 à 7.

L'articulation 5 comporte un trou circulaire traversant 8 effectué dans une pièce de liaison 9 au tube pivot du cycle (non illustré).

Les corps tronconiques 6, 7 sont reçus dans des logements 10, 11 de forme complémentaire formés d'un côté et de l'autre de l'articulation 5 (voir figure 2), en faisant partie de celle-ci. Les corps tronconiques 6, 7 sont ainsi montés à rotation dans leur logement respectif 10, 11 et définissent ainsi l'axe de rotation A-A de l'articulation 5.

Les corps tronconiques 6, 7 sont reliés l'un à l'autre par des moyens de liaison qui dans ce premier mode de réalisation comportent une pluralité de vis 12 qui relient les bras 4 du corps de potence 1 à l'articulation 5 en s'étendant par un premier alésage respectif 13 prévu alternativement dans l'un et l'autre des bras 4, ce premier alésage 13 pouvant être aligné sur un deuxième alésage 14 prévu dans l'un des corps tronconiques 6, 7 afin de permettre aux vis 12 d'être vissées dans un trou taraudé respectif 15 prévu sur la face intérieure de l'autre corps tronconique 7, 6 (voir figure 3, 4, 6, 7).

Dans l'exemple illustré, six vis de liaison 12 sont utilisées, à raison de trois de chaque côté. Un nombre pair de vis est indispensable pour l'équilibre et ce nombre peut être choisi à partir de deux, mais est de préférence de quatre ou six régulièrement espacées sur la périphérie des cônes.

Lorsque les vis de liaison 12 sont mises en place et serrées, elles rapprochent les corps tronconiques 6, 7 l'un de l'autre pour les serrer dans le logement respectif 10, 11 de l'articulation.

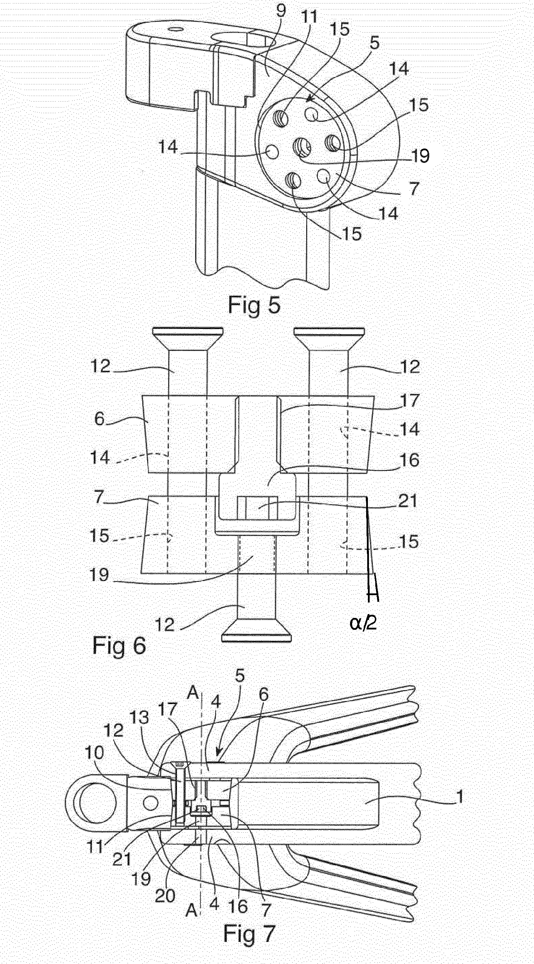

Selon une caractéristique essentielle de l'invention, l'angle de conicité α des corps tronconiques 6, 7 présente une valeur suffisamment faible pour l'obtention d'un coincement des corps tronconiques 6, 7 à l'intérieur des logements 10, 11. La moitié (α/2) de cet angle de conicité a est indiquée à la figure 6. L'angle de conicité α correspond à un sommet imaginaire dans la prolongation des surfaces coniques des corps tronconiques. Grâce à cette caractéristique, on élimine tout risque de glissement des corps tronconiques 6, 7 à l'intérieur des logements 10, 11 et le couple de serrage nécessaire est relativement faible.

L'angle de conicité α est inférieur à 15° et correspond notamment à une valeur d'environ 10°.

A cause de ce coincement recherché des corps tronconiques 6, 7 à l'intérieur des logements 10, 11, un moyen d'expulsion est en général nécessaire pour faire sortir les corps tronconiques de leurs logements.

Pour la commodité de l'utilisateur et selon une autre caractéristique de l'invention, un moyen d'expulsion des corps tronconiques 6, 7 est prévu entre ceux-ci. Ce moyen d'expulsion est apte à amorcer l'expulsion des corps tronconiques 6, 7 de leur logement respectif 10, 11 pour les desserrer en vue d'un réglage de l'inclinaison de la potence.

Ce moyen d'expulsion comporte une vis d'expulsion 16 qui est vissée dans un trou taraudé central 17 de l'un (6) des corps tronconiques 6, 7. La tête de la vis d'expulsion 16 est logée dans un évidement central 18 dans la face intérieure de l'autre corps tronconique 7 qui en outre présente un trou traversant central 19 aligné sur un trou traversant 20 aménagé dans un des bras 4 de la potence afin de donner accès de l'extérieur à l'empreinte 21 de la tête de la vis d'expulsion 16.

Ainsi, lorsque la vis d'expulsion est dévissée, la tête de la vis vient en appui contre le fond de l'évidement central 18 pour provoquer l'expulsion des corps tronconiques 6, 7 dans des sens opposés en les détachant des surfaces d'appui sur le logement respectif 10, 11.

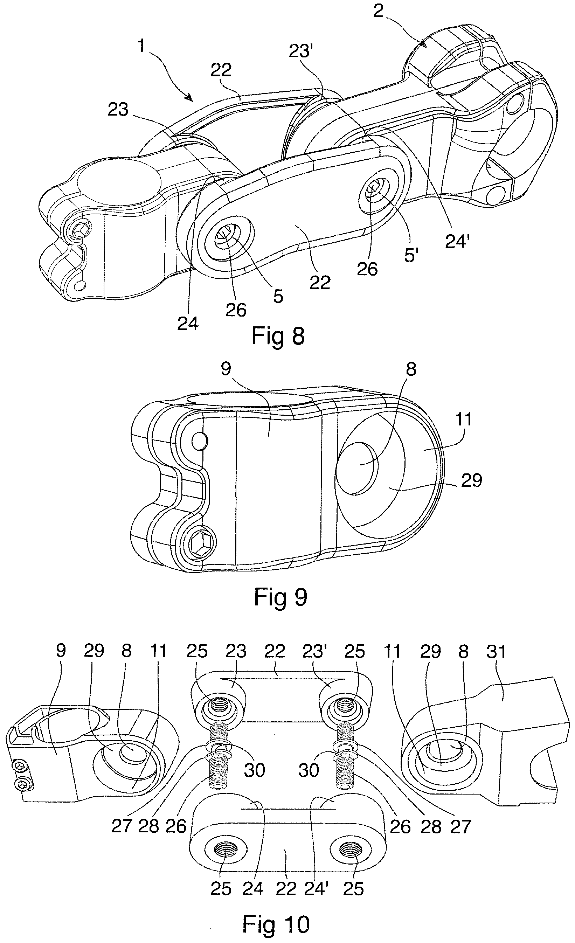

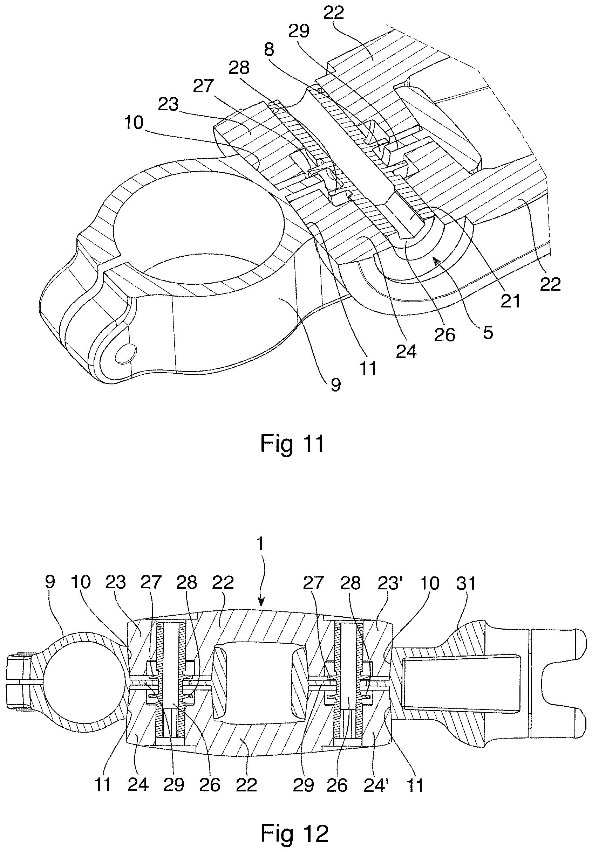

Dans le deuxième mode de réalisation illustré aux figures 8 à 12, le corps de potence 1 est composé de deux bras parallèles 22 et chaque bras est en une seule pièce avec un corps tronconique respectif 23, 24 disposé à l'extrémité du bras sur la face intérieure de celui-ci (voir figure 12). Ces corps tronconiques 23, 24 sont, tout comme dans le premier mode de réalisation, reçus dans des logements 10, 11 de forme complémentaire formés d'un côté et de l'autre de l'articulation 5 et font partie de celle-ci.

Chaque corps tronconique 23, 24 est pourvu d'un trou central taraudé 25 pouvant coopérer avec des moyens de liaison qui dans ce mode de réalisation ne comportent qu'une vis à double pas 26. Cette vis à double pas 26 relie les corps tronconiques 23, 24 l'un à l'autre et les approche l'un de l'autre lorsqu'elle est vissée dans un sens pour les serrer contre les fond des logements 10, 11, et les éloigne l'un de l'autre pour les desserrer lorsqu'elle est vissée dans l'autre sens pour les relâcher afin de permettre le réglage de l'angle d'inclinaison de la potence.

Une section centrale de la vis à double pas 26 comporte deux collerettes 27, 28 espacées l'une de l'autre constituant un moyen d'expulsion des corps tronconiques 23, 24 en étant disposées de part et d'autre d'une paroi de séparation 29. Un trou circulaire traversant 8 se trouve au centre de la paroi et permet l'installation de la vis à double pas 26 avec les collerettes 27, 28 de part et d'autre de la paroi grâce au fait que l'une (28) des collerettes est pourvue de méplats 30 diamétralement opposés. Ainsi, en inclinant la vis à double pas 26, il est possible de l'introduire de manière à placer les collerettes 27, 28 de part et d'autre de la paroi. De cette manière, un moyen d'expulsion est obtenu lorsque l'une ou l'autre des collerettes vient buter contrer la paroi de séparation 29.

Les figures 8, 10 et 12 montrent une potence selon ce deuxième mode de réalisation pourvue d'une deuxième articulation 5' analogue à celle qui vient d'être décrite et qui relie la potence 1 à un élément de support 31 portant les moyens de fixation 2 du guidon 3. Cette deuxième articulation 5' comporte ainsi une deuxième paire de corps tronconiques 23', 24', reçus dans des évidements complémentaires 10, 11 disposés de part et d'autre de cette deuxième articulation 5' et le réglage de l'inclinaison de l'élément de support se fait de la même manière que celle déjà décrite.

Une potence de cycle est ainsi obtenue qui grâce à l'invention permet le réglage de l'angle d'inclinaison de la potence en continu et qui permet le serrage de la potence dans la position angulaire souhaitée sans aucun risque d'un glissement ultérieur dans l'articulation grâce au fait que les corps tronconiques sont coincés à l'intérieur de ses logements, ce qui est dû à la faible valeur de l'angle de conicité des corps tronconiques. Un glissement entraînerait autrement un déréglage avec une variation de la hauteur du guidon.

Bien entendu, l'invention n'est pas limitée aux exemples illustrés et décrits, et l'homme du métier sera en mesure de trouver des variantes sans pour autant sortir du cadre de l'invention.

## Revendications

1. Potence de cycle à inclinaison réglable, comprenant un corps de potence (1) dont l'une des extrémités comporte des moyens de fixation (2) d'un guidon (3), l'extrémité opposée comportant deux bras parallèles (4) pouvant être reliés à un tube pivot de fourche par une articulation (5) associée à des moyens de serrage (6, 7) aptes à bloquer la potence dans une position correspondant à un angle d'inclinaison choisi, lesdits moyens de serrage comportant une paire de corps tronconiques lisses (6, 7) reliés aux faces intérieures des extrémités correspondantes desdits bras (4), lesdits corps tronconiques (6, 7) faisant partie de l'articulation en étant reçus dans des logements lisses (10, 11) de forme complémentaire formés d'un côté et de l'autre de l'articulation (5), lesdits corps tronconiques (6, 7) étant reliés l'un à l'autre par des moyens de liaison (12) afin de permettre de les rapprocher l'un de l'autre pour les serrer dans le logement respectif (10, 11) de l'articulation, et de les desserrer en les éloignant l'un de l'autre pour effectuer un réglage en continu de l'inclinaison de la potence, **caractérisée en ce que** l'angle de conicité (α) des corps tronconiques (6, 7) présente une valeur inférieure à 15° pour l'obtention d'un coincement des corps tronconiques (6, 7) à l'intérieur desdits logements (10, 11) de forme complémentaire,
et **en ce qu'**un moyen d'expulsion (16) des corps tronconiques (6, 7) est prévu entre ceux-ci, ledit moyen d'expulsion étant apte à dégager les corps tronconiques (6, 7) de leur logement respectif (10, 11),
ledit moyen d'expulsion comportant une vis d'expulsion (16) vissée dans un trou taraudé central (17) d'un des corps tronconiques (6, 7) et dont la tête est logée dans un évidement central (18) dans la face intérieure de l'autre corps tronconique (7, 6) qui en outre présente un trou traversant central (19) aligné sur un trou traversant (20) d'un desdits bras (4) afin de donner accès de l'extérieur à la tête de la vis d'expulsion (16) de sorte que lorsque ladite vis est dévissée, les corps tronconiques (6, 7) sont desserrés de leur logement respectif (10, 11).

2. Potence de cycle selon la revendication 1, **caractérisée en ce que** ledit angle de conicité est d'environ 10°.

3. Potence de cycle selon l'une quelconque des revendications 1 à 2, **caractérisée en ce que** lesdits moyens de liaison comportent une pluralité de vis (12) s'étendant par un premier alésage respectif (13) prévu alternativement dans l'un et l'autre desdits bras (4) du corps de potence (1), ce premier alésage (13) pouvant être aligné sur un deuxième alésage (14) prévu dans l'un des corps tronconiques (6, 7) afin de permettre auxdites vis (12) d'être vissées dans un trou taraudé respectif (15) prévu sur la face intérieure de l'autre corps tronconique (7, 6).

4. Potence de cycle selon l'une quelconque des revendications précédentes, **caractérisée en ce que** les corps tronconiques (6, 7) sont des pièces rapportées.

5. Potence de cycle à inclinaison réglable, comprenant un corps de potence (1) dont l'une des extrémités comporte des moyens de fixation (2) d'un guidon (3), l'extrémité opposée comportant deux bras parallèles (22) pouvant être reliés à un tube pivot de fourche par une articulation (5) associée à des moyens de serrage (23, 24) aptes à bloquer la potence dans une position correspondant à un angle d'inclinaison choisi, lesdits moyens de serrage comportant une paire de corps tronconiques lisses (23, 24) reliés aux faces intérieures des extrémités correspondantes desdits bras (22), lesdits corps tronconiques (23, 24) faisant partie de l'articulation en étant reçus dans des logements lisses (10, 11) de forme complémentaire formés d'un côté et de l'autre de l'articulation (5), lesdits corps tronconiques (23, 24) étant reliés l'un à l'autre par des moyens de liaison (26) afin de permettre de les rapprocher l'un de l'autre pour les serrer dans le logement respectif (10, 11) de l'articulation, et de les desserrer en les éloignant l'un de l'autre pour effectuer un réglage en continu de l'inclinaison de la potence, **caractérisée en ce que** l'angle de conicité (α) des corps tronconiques (23, 24) présente une valeur inférieure à 15° pour l'obtention d'un coincement des corps tronconiques (23, 24) à l'intérieur desdits logements (10, 11) de forme complémentaire,
**en ce qu'**un moyen d'expulsion (27, 28) des corps tronconiques (23, 24) est prévu entre ceux-ci, ledit moyen d'expulsion étant apte à dégager les corps tronconiques (23, 24) de leur logement respectif (10, 11),
**en ce que** le corps de potence (1) est formé par les deux bras parallèles (22) et chaque corps tronconique (23, 24) de ladite paire de corps tronconiques est en une seule pièce avec un bras respectif (22),
**en ce que** lesdits moyens de liaison comportent une vis à double pas (26) coopérant avec un trou taraudé central (25) sur la face intérieure des corps tronconiques opposés (23, 24),
et **en ce que** ladite vis à double pas (26) comporte dans une section centrale deux collerettes espacées (27, 28) dont l'une (28) comporte sur sa périphérie deux méplats (30) diamétralement opposés permettant d'introduire la vis à double pas (26), en l'inclinant, par un trou central (8) d'une paroi de séparation (29) séparant lesdits logements (10, 11) des corps tronconiques (23, 24) afin de placer les collerettes (27, 28) de part et d'autre de la paroi de séparation (29) de sorte que ledit moyen d'expulsion est obtenu lorsque l'une ou l'autre des collerettes (27, 28) vient buter contre ladite paroi de séparation (29).

6. Potence de cycle selon la revendication 5, **caractérisée en ce que** la potence comporte à son extrémité de fixation d'un guidon (3) une deuxième paire de corps tronconiques (23', 24') reçus dans des évidements complémentaires (10, 11) prévus dans un élément de support (31) portant lesdits moyens de fixation d'un guidon, de manière à former une deuxième articulation (5').

7. Potence de cycle selon l'une quelconque des revendications 5 ou 6, **caractérisée en ce que** ledit angle de conicité est d'environ 10°.

8. Cycle pourvu d'une potence selon l'une quelconque des revendications précédentes.

## Patentansprüche

1. Lenkstangenschaft für ein Fahrrad mit einstellbarer Neigung, umfassend einen Lenkstangenschaftkörper (1), von dem eines der Enden Befestigungsmittel (2) eines Lenkers (3) aufweist, wobei das gegenüberliegende Ende zwei parallele Arme (4) aufweist, die mit einem Gabelgelenkrohr mittels eines Gelenks (5) verbindbar sind, das Spannmitteln (6, 7) zugeordnet sind, die imstande sind, den Lenkstangenschaft in einer Position zu blockieren, die einem gewählten Neigungswinkel entspricht, wobei die Spannmittel ein Paar glatter kegelstumpfförmiger Körper (6, 7) aufweisen, die mit den Innenseiten der entsprechenden Enden der Arme (4) verbunden sind, wobei die kegelstumpfförmigen Körper (6, 7) Teil des Gelenks sind, indem sie in glatten Aufnahmen (10, 11) komplementärer Form aufgenommen sind, die auf der einen und der anderen Seite des Gelenks (5) gebildet sind, wobei die kegelstumpfförmigen Körper (6, 7) aneinander durch Verbindungsmittel (12) verbunden sind, um zu erlauben, sie aneinander anzunähern, um sie in der jeweiligen Aufnahme (10, 11) des Gelenks zu spannen und um sie zu lösen, indem sie voneinander entfernt werden, um eine kontinuierliche Einstellung der Neigung des Lenkstangenschafts durchzuführen, **dadurch gekennzeichnet, dass** der Konizitätswinkel (α) der kegelstumpfförmigen Körper (6, 7) einen Wert unter 15° für das Erhalten eines Einklemmens der kegelstumpfförmigen Körper (6, 7) innerhalb der Aufnahmen (10, 11) komplementärer Form aufweist,
und dass ein Auswurfmittel (16) der kegelstumpfförmigen Körper (6, 7) zwischen diesen vorgesehen ist, wobei das Auswurfmittel imstande ist, die kegelstumpfförmigen Körper (6, 7) aus ihrer jeweiligen Aufnahme (10, 11) freizugeben,
wobei das Auswurfmittel eine Auswurfschraube (16) aufweist, die in ein zentrales Loch (17) geschraubt ist, das in einen der kegelstumpfförmigen Körper (6, 7) geschnitten ist und deren Kopf in einer zentralen Ausnehmung (18) in der Innenseite des anderen kegelstumpfförmigen Körpers (7, 6) untergebracht ist, der ferner ein durchgängiges zentrales Loch (19) aufweist, das auf einem durchgängigen Loch (20) von einem der Arme (4) ausgerichtet ist, um von außen Zugang zum Kopf der Auswurfschraube (16) derart zu gewähren, dass, wenn die Schraube gelöst wird, die kegelstumpfförmigen Körper (6, 7) aus ihrer jeweiligen Aufnahme (10, 11) gelöst werden.

2. Lenkstangenschaft für ein Fahrrad nach Anspruch 1, **dadurch gekennzeichnet, dass** der Konizitätswinkel zirka 10° beträgt.

3. Lenkstangenschaft für ein Fahrrad nach einem der Ansprüche 1 bis 2, **dadurch gekennzeichnet, dass** die Verbindungsmittel eine Vielzahl von Schrauben (12) aufweisen, die sich durch eine jeweilige erste Bohrung (13) erstrecken, die alternativ in dem einem und dem anderen der Arme (4) des Lenkstangenschaftkörpers (1) vorgesehen ist, wobei diese erste Bohrung (13) auf eine zweite Bohrung (14) ausrichtbar ist, die in einem der kegelstumpfförmigen Körper (6, 7) vorgesehen ist, um den Schrauben (12) zu erlauben, in ein jeweiliges geschnittenes Loch (15) geschraubt zu sein, das auf der Innenseite des anderen kegelstumpfförmigen Körpers (7, 6) vorgesehen ist.

4. Lenkstangenschaft für ein Fahrrad nach einem der vorangehenden Ansprüche, **dadurch gekennzeichnet, dass** die kegelstumpfförmigen Körper (6, 7) eingesetzte Teile sind.

5. Lenkstangenschaft für ein Fahrrad mit einstellbarer Neigung, umfassend einen Lenkstangenschaftkörper (1), von dem eines der Enden Befestigungsmittel (2) eines Lenkers (3) aufweist, wobei das gegenüberliegende Ende zwei parallele Arme (22) aufweist, die mit einem Gabelgelenkrohr mittels eines Gelenks (5) verbindbar sind, das Spannmitteln (23, 24) zugeordnet sind, die imstande sind, den Lenkstangenschaft in einer Position zu blockieren, die einem gewählten Neigungswinkel entspricht, wobei die Spannmittel ein Paar glatter kegelstumpfförmiger Körper (23, 24) aufweisen, die mit den Innenseiten der entsprechenden Enden der Arme (22) verbunden sind, wobei die kegelstumpfförmigen Körper (23, 24) Teil des Gelenks sind, indem sie in glatten Aufnahmen (10, 11) komplementärer Form aufgenommen sind, die auf der einen und der anderen Seite des Gelenks (5) gebildet sind, wobei die kegelstumpfförmigen Körper (23, 24) aneinander durch Verbindungsmittel (26) verbunden sind, um zu erlauben, sie aneinander anzunähern, um sie in der jeweiligen Aufnahme (10, 11) des Gelenks zu spannen und um sie zu lösen, indem sie voneinander entfernt werden, um eine kontinuierliche Einstellung der Neigung des Lenkstangenschafts durchzuführen, **dadurch gekennzeichnet, dass** der Konizitätswinkel (α) der kegelstumpfförmigen Körper (23, 24) einen Wert unter 15° für das Erhalten eines Einklemmens der kegelstumpfförmigen Körper (23, 24) innerhalb der Aufnahmen (10, 11) komplementärer Form aufweist,
dass ein Auswurfmittel (27, 28) der kegelstumpfförmigen Körper (23, 24) zwischen diesen vorgesehen ist, wobei das Auswurfmittel imstande ist, die kegelstumpfförmigen Körper (23, 24) aus ihrer jeweiligen Aufnahme (10, 11) freizugeben,
dass der Lenkstangenschaftkörper (1) von zwei parallelen Armen (22) gebildet ist und jeder kegelstumpfförmige Körper (23, 24) des Paares kegelstumpfförmiger Körper in einem einzigen Teil mit einem jeweiligen Arm (22) ist,
dass die Verbindungsmittel eine Doppelgewindeschraube (26) aufweisen, die mit einem zentralen geschnittenen Loch (25) auf der Innenseite der gegenüberliegenden kegelstumpfförmigen Körper (23, 24) zusammenwirkt,
und dass die Doppelgewindeschraube (26) in einem zentralen Sektor zwei beabstandete Kragen (27, 28) aufweist, von denen einer (28) auf seinem Umfang zwei diametral gegenüberliegende Abflachungen (30) aufweist, die erlauben, die Doppelgewindeschraube (26) geneigt durch ein zentrales Loch (8) einer Trennwand (29), welche die Aufnahmen (10, 11) der kegelstumpfförmigen Körper (23, 24) trennt, einzuführen, um die Kragen (27, 28) auf der einen und der anderen Seite der Trennwand (29) derart zu platzieren, dass das Auswurfmittel erhalten wird, wenn der eine oder der andere der Kragen (27, 28) an die Trennwand (29) anschlägt.

6. Lenkstangenschaft für ein Fahrrad nach Anspruch 5, **dadurch gekennzeichnet, dass** der Lenkstangenschaft an seinem Befestigungsende eines Lenkers (3) ein zweites Paar kegelstumpfförmiger Körper (23', 24') aufweist, die in komplementären Ausnehmungen (10, 11) aufgenommen sind, die in einem tragenden Element (31) vorgesehen sind, das die Befestigungsmittel eines Lenkers trägt, so dass ein zweites Gelenk (5') gebildet wird.

7. Lenkstangenschaft für ein Fahrrad nach einem der Ansprüche 5 oder 6, **dadurch gekennzeichnet, dass** der Konizitätswinkel zirka 10° beträgt.

8. Fahrrad, das mit einem Lenkstangenschaft nach einem der vorangehenden Ansprüche ausgestattet ist.

## Claims

1. A bicycle stem with adjustable inclination, comprising a stem body (1) whereof one of the ends includes fastening means (2) of the handlebar (3), the opposite end including two parallel arms (4) able to be connected to a fork pivot tube by an articulation (5) associated with gripping means (6, 7) able to block the stem in a position corresponding to a chosen inclination angle, said gripping means including a pair of smooth frustoconical bodies (6, 7) connected to the inner faces of the corresponding ends of said arms (4), said frustoconical bodies (6, 7) being part of the articulation while being received in smooth housings (10, 11) of complementary shape formed on either side of the articulation (5), said frustoconical bodies (6, 7) being connected to one another by connecting means (12) in order to make it possible to bring them closer to one another to tighten them in the respective housing (10, 11) of the articulation, and to loosen them by moving them away from one another to perform a continuous adjustment of the inclination of the stem, **characterized in that** the taper angle (α) of the frustoconical bodies (6, 7) has a value below 15° in order to obtain jamming of the frustoconical bodies (6, 7) inside said housings (10, 11) of complementary shape,
and **in that** an expulsion means (16) of the frustoconical bodies (6, 7) is provided between them, said expulsion means being able to release the frustoconical bodies (6, 7) from their respective housing (10, 11),
said expulsion means including an expulsion screw (16) screwed into a central tapped hole (17) of one of the frustoconical bodies (6, 7) and the head of which is housed in a central recess (18) in the inner face of the other frustoconical body (7, 6), which further has a central through hole (19) aligned on a through hole (20) of one of said arms (4) in order to provide access from the outside of the head of the expulsion screw (16) such that when said screw is unscrewed, the frustoconical bodies (6, 7) are loosened from their respective housing (10, 11).

2. The bicycle stem according to claim 1, **characterized in that** said taper angle is about 10°.

3. The bicycle stem according to any one of claims 1 to 2, **characterized in that** said connecting means include a plurality of screws (12) extending through a respective first bore (13) provided alternatively in one and the other of said arms (4) of the stem body (1), this first bore (13) being able to be aligned on a second bore (14) provided in one of the frustoconical bodies (6, 7) in order to allow said screws (12) to be screwed in a respective tapped hole (15) provided on the inner face of the other frustoconical body (7, 6).

4. The bicycle stem according to any one of the preceding claims, **characterized in that** the frustoconical bodies (6, 7) are attached parts.

5. A bicycle stem with adjustable inclination, comprising a stem body (1) whereof one of the ends includes fastening means (2) for a handlebar (3), the opposite end including two parallel arms (22) able to be connected to a fork pivot tube by an articulation (5) associated with gripping means (23, 24) able to block the stem in a position corresponding to a chosen inclination angle, said gripping means including a pair of smooth frustoconical bodies (23, 24) connected to the inner faces of the corresponding ends of said arms (22), said frustoconical bodies (23, 24) being part of the articulation while being received in smooth housings (10, 11) of complementary shape formed on either side of the articulation (5), said frustoconical bodies (23, 24) being connected to one another by connecting means (26) in order to make it possible to bring them closer to one another to tighten them in the respective housing (10, 11) of the articulation, and to loosen them by separating them from one another to perform a continuous adjustment of the inclination of the stem, **characterized in that** the taper angle (α) of the frustoconical bodies (23, 24) has a value below 15° in order to obtain jamming of the frustoconical body (23, 24) inside said housings (10, 11) of complementary shape,
**in that** an expulsion means (27, 28) of the frustoconical bodies (23, 24) is provided between them, said expulsion means being able to release the frustoconical bodies (23, 24) from their respective housing (10, 11),
**in that** the stem body (1) is formed by the two parallel arms (22) and each frustoconical body (23, 24) of said pair of frustoconical bodies is in a single piece with a respective arm (22),
**in that** said connecting means include a double-threaded screw (26) cooperating with a central tapped hole (25) on the inner face of the opposite frustoconical bodies (23, 24),
and **in that** said double-threaded screw (26) includes, in a central section, two spaced apart collars (27, 28), one (28) of which includes, on its periphery, two diametrically opposite flats (30) making it possible to insert the double-threaded screw (26), by inclining it, through a central hole (8) of the separating wall (29) separating said housings (10, 11) from the frustoconical bodies (23, 24) in order to place the collars (27, 28) on either side of the separating wall (29) such that said expulsion means is obtained when one or the other of the collars (27, 28) abuts against said separating wall (29).

6. The bicycle stem according to claim 5, **characterized in that** the stem includes, at its fastening end for a handlebar (3), a second pair of frustoconical bodies (23', 24') received in complementary recesses (10, 11) provided in a support element (31) bearing said means for fastening a handlebar, so as to form a second articulation (5').

7. The bicycle stem according to any one of claims 5 or 6, **characterized in that** said taper angle is about 10°.

8. A bicycle provided with a stem according to any one of the preceding claims.
